# EUROPEAN PATENT APPLICATION

(11) **EP 4 708 774 A1**
(43) Date of publication of application: **11.03.2026**
(21) Application number: 25734179.2
(22) Date of filing: 28.04.2025
(51) Int. Cl.: H04L 9/40, G06Q 30/018, H04L 67/12, H04L 9/06

(54) **VARIABLE ANTI-COUNTERFEITING METHOD AND SYSTEM ORIENTED TO PRODUCT TRANSPORTATION PROCESS, DEVICE AND MEDIUM**

(30) Priority: 23.07.2024 CN 202410989757
(71) Applicant: Foshan Yuhe Technology Co., Ltd., Foshan, Guangdong 528315 (CN)
(72) Inventor: DENG, Fuquan, Foshan, Guangdong 528315 (CN)
(74) Representative: Dr. Gassner & Partner mbB
(86) International application number: PCT/CN2025/091744
(87) International publication number: WO 2026/020919

(57) **Abstract**

The present application relates to a dynamic anti-counterfeiting method, system, device, and medium for product transportation processes, the method includes a detection terminal accesses cloud platform by identifying a detected terminal, the cloud platform identifies a manner in which a current detection terminal accesses the cloud platform, when the detection terminal accesses the cloud platform without identifying the detected terminal through a preset system, the cloud platform sends a verification program to the current detection terminal; the current detection terminal sends a password to the cloud platform for verification, the password is sourced from a previous seller; the cloud platform determines the password according to a preset comparison rule; when the cloud platform verifies that the password is correct, the cloud platform changes the password according to a preset change rule, grants an ordinary viewing permission for product information and an exclusive viewing permission based on a changed password to the current detection terminal; when the cloud platform determines that the password is incorrect, the cloud platform sends counterfeit prompt information to the current detection terminal. The present application has an effect of improving product safety.

## Description

### TECHNICAL FIELD

The present disclosure relates to a technical field of anti-counterfeiting, and in particular, to a dynamic anti-counterfeiting method, system, device, and medium for product transportation processes.

### BACKGROUND

In a domestic market, counterfeit and shoddy products are prevalent, whose quality and safety often cannot be guaranteed, thereby posing serious economic, social, and security risks. The prevalence of counterfeit and shoddy products also damages reputation and market position of legitimate brands. As counterfeit and shoddy products are often sold at low prices or even disguised as genuine products, this not only leads to losses in sales and profits for legitimate enterprises but also may reduce trust of consumers in brands, thereby affecting long-term competitiveness and market standing of enterprises.

Currently, various anti-counterfeiting technologies exist in the market, such as QR code anti-counterfeiting and RFID anti-counterfeiting. By scanning a label or code on a product, purchasers can verify authenticity of the product, but the method is relatively simplistic. Since most products are sold to other distributors or retailers in a form of multiple packages together, there is a situation where counterfeiters obtain genuine products during transportation processes and then replicate product QR codes in large quantities. Consequently, single-code anti-counterfeiting verification mechanism exhibits limited anti-counterfeiting effect when products are resold multiple times or when anti-counterfeiting codes are illegally copied. Thus, research into variation-targeted anti-counterfeiting methods for product transportation processes carries significant implications.

Therefore, research into a dynamic anti-counterfeiting method for product transportation processes is of great significance.

### SUMMARY

A dynamic anti-counterfeiting method, system, device, and medium for product transportation processes is provided in the claims of the present application, which has a characteristic of improving an anti-counterfeiting effect during product transportation processes.

In a first aspect, the present application provides a dynamic anti-counterfeiting method for product transportation processes, including: a detection terminal accesses a cloud platform by identifying a detected terminal, the cloud platform identifies a manner in which a current detection terminal accesses the cloud platform, comprising: when the current detection terminal accesses the cloud platform by identifying the detected terminal through a preset system, the cloud platform detects whether the detected terminal has a bound detection terminal; when the cloud platform detects that the detected terminal has no bound detection terminal, the cloud platform sends a password and a verification program to the current detection terminal, after successful verification, the cloud platform binds the detected terminal to the current detection terminal, and grants an ordinary viewing permission for product information to the current detection terminal; when the cloud platform detects that the detected terminal has the bound detection terminal, the cloud platform determines whether the bound detection terminal is the current detection terminal; when the cloud platform detects that the bound detection terminal is the current detection terminal, the cloud platform grants the ordinary viewing permission for the product information to the current detection terminal; when the cloud platform detects that the bound detection terminal is not the current detection terminal, the cloud platform sends counterfeit prompt information to the current detection terminal; when the current detection terminal accesses the cloud platform without identifying the detected terminal through the preset system, the cloud platform sends the verification program to the current detection terminal; the current detection terminal sends the password to the cloud platform for verification, the password is sourced from a previous seller; the cloud platform verifies the password according to a preset comparison rule; when it is verified that the password is correct, the cloud platform changes the password according to a preset change rule, grants the ordinary viewing permission for the product information and an exclusive viewing permission based on the changed password to the current detection terminal, and sends genuine product certification information to the current detection terminal; and when it is verified that the password is incorrect, the cloud platform sends the counterfeit prompt information to the current detection terminal.

According to the above technical solution, in a product transportation process, once a product or a package is correctly identified, its password may be changed. In case of counterfeit the product or package, since a genuine detected terminal has already been authenticated by a counterfeiter, when the counterfeiter is unaware that the password has been changed, mass-counterfeiting the detected terminal of the product or package will only result in password identification errors, thereby enabling a next distributor to receive the counterfeit prompt information. Even if the counterfeiter notifies the next distributor of the password, the password can only be verified correctly once. When the distributor detects a counterfeit product for a second time, the distributor may still receive the counterfeit prompt information since the password has already been changed. Through the immediate password change upon successful verification and the setting of the exclusive viewing permission based on the password, the anti-counterfeiting effect during the product transportation can be effectively improved. In a case where the current detection terminal accesses the cloud platform by identifying the detected terminal through the preset system, the cloud platform will detect whether the detected terminal is bound to the detection terminal. If not, the detection terminal will be bound to the detected terminal irreversibly. Once bound, the relationship cannot be unbound. If the counterfeit product appears, users at sales terminal can know that the product is suspected of being counterfeited by scanning and identifying the product through the preset system. In addition, the setting in the present application that the cloud platform sends the password to the current detection terminal can effectively improve flexibility of sales. It eliminates the need for sales staff to query the system and manually provide passwords to customers, thereby streamlining the process and facilitating the binding operation.

Optionally, when the current detection terminal accesses the cloud platform by identifying the detected terminal through the preset system, the cloud platform detects whether the detected terminal has the bound detection terminal, further includes: when the cloud platform detects that the detected terminal has no bound detection terminal, the cloud platform sends the password and the verification program to the current detection terminal, after successful verification, the cloud platform binds the detected terminal to the current detection terminal, changes the password according to the preset change rule, and grants the ordinary viewing permission for the product information and the exclusive viewing permission based on the changed password to the current detection terminal; when the cloud platform detects that the detected terminal has the bound detection terminal, the cloud platform determines whether the bound detection terminal is the current detection terminal; when the cloud platform detects that the bound detection terminal is the current detection terminal, the cloud platform grants the ordinary viewing permission for the product information and the exclusive viewing permission based on the changed password to the current detection terminal; and when the cloud platform detects that the bound detection terminal is not the current detection terminal, the cloud platform sends the counterfeit prompt information and the verification program to the current detection terminal, when the cloud platform receives and successfully verifies the changed password, the cloud platform grants the ordinary viewing permission for the product information to the current detection terminal.

According to the above technical solution, after completing the binding operation, the password is also changed to enable other users to view the product information by providing the changed password. Although other users may receive the counterfeit prompt information, the ordinary viewing permission for the product information will be granted to the current detection terminal as long as the password is correct. This setting improves the usability and flexibility of the product after purchase.

Optionally, the cloud platform verifies the password according to the preset comparison rule, includes: verification information of the detected terminal comprises a password storage address number of the detected terminal, the cloud platform retrieves a reference code according to the password storage address number of the detected terminal and compares the password with the reference code; when the password matches the reference code, the password is verified to be correct; and when the password fails to match the reference code, the password is verified to be incorrect.

According to the above technical solution, retrieval speed may be improved by using the password storage address number of the detected terminal for retrieval.

Optionally, the cloud platform changes the password according to the preset change rule, includes: when the cloud platform verifies that the password is correct, the cloud platform automatically triggers a password generation system to generate encrypted data, sets the encrypted data as the changed password, and synchronizes a corresponding reference code, and wherein the password generation system generating the encrypted data comprises randomly generating a UUID as a data source to be encrypted, performing encryption processing on the data source using a MD5 encryption algorithm to obtain the encrypted data.

According to the above technical solution, the UUID, as a unique identifier, ensures uniqueness of the data source, while the integration of the encryption algorithm guarantees confidentiality and integrity of the data.

Optionally, the detected terminal comprises a packaged detected terminal and product detected terminals, when the cloud platform operates on the packaged detected terminal, the cloud platform synchronously operates on all the product detected terminals within a package; wherein, when the cloud platform changes a password of the packaged detected terminal, the cloud platform synchronously changes passwords of all the product detected terminals within the package; when the cloud platform binds the current detection terminal to the packaged detected terminal, the cloud platform synchronously binds the current detection terminal to all the product detected terminals within the package; when the cloud platform grants the exclusive viewing permission based on the password of the packaged detected terminal to the current detection terminal, the cloud platform synchronously grants the exclusive viewing permission based on the passwords of all the product detected terminals within the package to the current detection terminal; and when the cloud platform grants the ordinary viewing permission for the product information of the packaged detected terminal to the current detection terminal, the cloud platform synchronously grants the ordinary viewing permission for the product information of all the product detected terminals within the package to the current detection terminal.

The above technical solution is designed to ensure that once the product is successfully verified, previous sellers will no longer have access to both the password of the packaged detected terminal and the passwords of the product detected terminals, thereby further enhancing anti-counterfeiting capability during the product transportation processes. Compared with a case where the password of the product detected terminal is not synchronized, this reduces an occurrence of the previous seller in a sales chain using a known password of the product detected terminal to steal or replace genuine products for resale.

Optionally, when the cloud platform obtains the password by sending the verification program to the current detection terminal, simultaneously obtaining an ID code of the current detection terminal, when the password is correct and is changed, associating the ID code of the current detection terminal with the changed password, registering the association between the ID code of the current detection terminal and the changed password in a traceability table; and when the password is incorrect, matching the incorrect password with passwords in the traceability table, when the incorrect password matches a password in the traceability table successfully, registering the ID code of the current detection terminal in an exception record table corresponding to the successfully matched password, when a number of exception records in the exception record table reaches a preset threshold, flagging the password in the traceability table as being in an abnormal status, and triggering the cloud platform to send an infringement warning prompt and an exception data package to a production terminal, the exception data package comprises the password in the abnormal status and an associated ID code of the detection terminal.

Based on the above technical solution, an establishment of the traceability table enables timely identification of detected terminals that have been massively counterfeited. By binding the ID of a corresponding detection terminal, a manufacturer can trace owners of problematic detection terminals for the counterfeit product, promptly identify counterfeiting situations, hold each node accountable for forgery responsibilities, and enhance product safety.

In a second aspect, the present application provides a dynamic anti-counterfeiting system for product transportation processes, a detection terminal and a cloud platform, the detection terminal includes an accessing module (1) and a sending module (4); the cloud platform includes an identification module (2), a verification module (3), a comparison module (5), a changing module (6), and a prompting module (7); wherein the detection terminal is configured to identify that the detected terminal is accessed to the cloud platform through the accessing module (1), the cloud platform is configured to identify a manner in which the current detection terminal accesses the cloud platform through the identification module (2), comprising: detecting whether the detected terminal has a bound detection terminal when the detection terminal accesses the cloud platform by identifying the detected terminal through a preset system, sending a password and a verification program to the current detection terminal when detecting that the detected terminal has no bound detection terminal, binding the detected terminal to the current detection terminal, and granting an ordinary viewing permission for product information to the current detection terminal after successful verification, determining whether the bound detection terminal is the current detection terminal when it is detected that the detected terminal has the bound detection terminal, granting the ordinary viewing permission for the product information to the current detection terminal when it is detected that the bound detection terminal is the current detection terminal, sending counterfeit prompt information to the current detection terminal when it is detected that the bound detection terminal is not the current detection terminal, sending the verification program to the current detection terminal through the verification module (3) when the detection terminal accesses the cloud platform by directly identifying the detected terminal, the current detection terminal is configured to send the password to the cloud platform for verification through the sending module (4), the password is sourced from a previous seller; the cloud platform is further configured to verify the password according to a preset comparison rule through the comparison module (5), change the password according to a preset change rule through the changing module (6) and grant the ordinary viewing permission for the product information and the exclusive viewing permission based on the changed password to the current detection terminal when it is verified that the password is correct, and send the counterfeit prompt information to the current detection terminal through the prompting module (7) when it is verified that the password is incorrect.

In a third aspect, the present application provides an electronic device including a memory and a processor, with a computer program stored therein, when the computer program is executed by the processor, the processor implements the dynamic anti-counterfeiting method for the product transportation processes mentioned above.

In a fourth aspect, the present application provides a non-volatile computer-readable storage medium that stores the computer program, when the computer program is executed by the processor, it implements the anti-counterfeiting method for the product transportation processes mentioned above.

In summary, the present application includes the following beneficial technical effects: in the product transportation process, once the product or the package is correctly identified, the password may be changed. In case of counterfeit the product or package, since the genuine detected terminal has already been authenticated by a counterfeiter, when the counterfeiter is unaware that the password has been changed, mass-counterfeiting the detected terminal of the product or package will only result in password identification errors, thereby enabling the next distributor to receive the counterfeit prompt information. Even if the counterfeiter notifies the next distributor of the password, the password can only be correctly identified once. When the distributor detects the counterfeit product for the second time, the distributor may still receive the counterfeit prompt information since the password has already been changed. Through the immediate password change upon successful verification and the setting of the exclusive viewing permission based on the password, the anti-counterfeiting effect during the product transportation can be effectively improved.

### BRIEF DESCRIPTION OF THE DRAWINGS.

FIG. 1 is a flowchart of a dynamic anti-counterfeiting method for product transportation processes according to an embodiment of the present application;
FIG. 2 is a flowchart of additional steps in Step S0 according to another embodiment of the present application;
FIG. 3 is a flowchart of additional steps in Step S2 according to another embodiment of the present application;
FIG. 4 is a flowchart of additional steps in Step S12 according to another embodiment of the present application;
FIG. 5 is a flowchart of additional steps in a step in which a cloud platform sends a verification program to a current detection terminal according to another embodiment of the present application;
FIG. 6 is schematic structural diagram of a dynamic anti-counterfeiting system for product transportation processes according to an embodiment of the present application.
FIG. 7 is a principle block diagram of an electronic device according to an embodiment of the present application;
List of reference signs: 1. accessing module; 2. identification module; 3. verification module; 4. sending module; 5. comparison module; 6. changing module; 7. prompting module.

### DETAILED DESCRIPTION

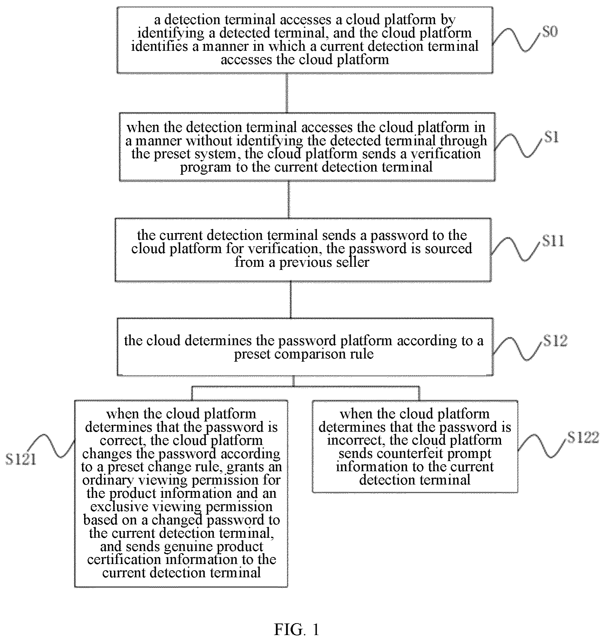

The present application is further described in detail below with reference to FIGS. 1-7.

**In** order to make the objectives, technical solutions, and advantages of the present application clearer, further detailed explanation of the present application will be provided in conjunction with FIGS 1-7 and corresponding embodiments. It should be understood that the specific embodiments described herein are only used to explain the present application and are not intended to limit the present application.

Embodiments of the present application provide a dynamic anti-counterfeiting method, system, device, and medium for product transportation processes.

Referring to FIG. 1, the dynamic anti-counterfeiting method for the product transportation processes provided in an embodiment of the present application includes: S0. a detection terminal accesses a cloud platform by identifying a detected terminal, and the cloud platform identifies a manner in which a current detection terminal accesses the cloud platform.

In an embodiment, the detected terminal may be a chip, and the detection terminal may be a detection instrument set up for a supporting product terminal of a manufacturer or a mobile phone with NFC function. In another embodiment, the detected terminal may be a graphic code such as a QR code or a bar code, and the detection terminal may be a common mobile phone or other Internet communication device. The identification between the detection terminal and the detected terminal may be achieved through a plurality of methods, including at least numbers, symbols, letters, pictures, and wavebands. The detection terminal accesses the cloud platform by identifying the detected terminal. In order to distinguish between two scenarios of product transportation processes and product sales terminals, the cloud platform in the present application needs to identify a manner in which the detection terminal accesses the cloud platform. Among them, the anti-counterfeiting objects for the product transportation processes are mainly distributors, wholesalers, and retailers. The cloud platform is developed and managed by the manufacturer. The manufacturer is a production terminal, and thus the manufacturer has a viewing and management permission of all contents of the cloud platform. At the same time, the cloud platform also sets up corresponding warehousing systems for the distributors, the wholesalers, and the retailers, which is conducive to the management of product transportation processes and facilitates users to view product information after purchasing products. For example, the cloud platform stores sales time, sales location, product query frequency, inquiry time, inquiry location, etc. of the manufacturer, the distributors, the wholesalers, and the retailers on the sales chain.

In addition, the detected terminal provided in the present application may include two types: a packaged detected terminal and product detected terminals. A package refers to a form in which a plurality of products are wrapped. The package is provided with the packaged detected terminal, and each of the products is provided with a product detected terminal. In the product transportation processes, the detection terminal mainly identifies the packaged detected terminal, but can also identify the product detected terminals. Since the distributors, the wholesalers, and the retailers belong to wholesale purchases, the packaged detected terminal is provided to be more conducive to product warehousing and anti-counterfeiting management, but there will also be cases where the package is split for purchasing products.

S1, when the detection terminal accesses the cloud platform in a manner without identifying the detected terminal through the preset system, the cloud platform sends a verification program to the current detection terminal.

When the detection terminal accesses the cloud platform in the manner that does not identify the detected terminal through the preset system, that is, the detection terminal directly identifies the detected terminal by using a NFC identification chip on the mobile phone or scanning a QR code instead of through a system such as a specific mini-program or official website, the cloud platform is triggered to send the verification program to the current detection terminal. The verification program is configured for the cloud platform to receive the password from the detection terminal.

In another embodiment, after the cloud platform identifies that the detection terminal accesses in the above manner, in addition to sending the verification program, the cloud platform will also trigger an activation of warehousing systems, which is convenient for the distributors, the wholesalers and the retailers to manage the warehousing of the product, and is also conducive to batch viewing of the product information and the password in a later stage.

S11, the current detection terminal sends a password to the cloud platform for verification, the password is sourced from a previous seller.

S12, the cloud platform determines the password according to a preset comparison rule.

In summary, the verification program is triggered, and the current detection terminal needs to input the password sourced from the previous seller into the verification program. The cloud platform determines whether the password is correct.

S121, when the cloud platform determines that the password is correct, the cloud platform changes the password according to a preset change rule, grants an ordinary viewing permission for the product information and an exclusive viewing permission based on a changed password to the current detection terminal, and sends genuine product certification information to the current detection terminal.

The current detection terminal always has the permission to view the product information after being granted the ordinary viewing permission by the cloud platform. The exclusive viewing permission set herein means that except for the manufacturer, only the seller of the current detection terminal can access the product information, and previous sellers are entirely deprived of this permission. The genuine product certification information is provided to confirm that the product is genuine.

S122, when the cloud platform determines that the password is incorrect, the cloud platform sends counterfeit prompt information to the current detection terminal.

In summary, in the product transportation processes, once the product or package is correctly identified, the password may be changed. In case of counterfeit the product or package, since a genuine detected terminal has already been authenticated by a counterfeiter, when the counterfeiter is unaware that the password has been changed, mass-counterfeiting the detected terminal of the product or package will only result in password identification errors, thereby enabling a next distributor to receive the counterfeit prompt information. Even if the counterfeiter notifies the next distributor of the password, the password can only be verified correctly once. When the distributor detects a counterfeit product for a second time, the distributor may still receive the counterfeit prompt information since the password has already been changed. Through the immediate password change upon successful verification and the setting of the exclusive viewing permission based on the password, an anti-counterfeiting effect during the product transportation processes can be effectively improved.

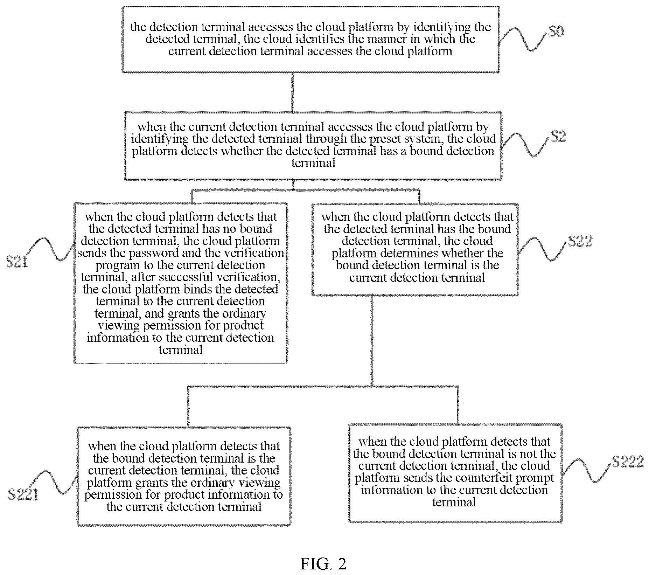

Referring to FIG. 2, in another embodiment, step S0: the detection terminal accesses cloud platform by identifying the detected terminal, the cloud platform identifies the manner in which the current detection terminal accesses the cloud platform, which further includes the following steps:
S2, when the current detection terminal accesses the cloud platform by identifying the detected terminal through the preset system, the cloud platform detects whether the detected terminal has a bound detection terminal.

S21, when the cloud platform detects that the detected terminal has no bound detection terminal, the cloud platform sends the password and the verification program to the current detection terminal, after successful verification, the cloud platform binds the detected terminal to the current detection terminal, and grants the ordinary viewing permission for the product information to the current detection terminal.

S22, when the cloud platform detects that the detected terminal has the bound detection terminal, the cloud platform determines whether the bound detection terminal is the current detection terminal.

S221, when the cloud platform detects that the bound detection terminal is the current detection terminal, the cloud platform grants the ordinary viewing permission for product information to the current detection terminal.

S222, when the cloud platform detects that the bound detection terminal is not the current detection terminal, the cloud platform sends the counterfeit prompt information to the current detection terminal.

In a scenario of the product sales terminal, when the users purchase the product and carry out anti-counterfeiting verification, they need to use the preset system, which may be the mini-program or the official website. For the manner of accessing the cloud platform by identifying the detected terminal through the preset system, the cloud platform will detect whether the detected terminal is bound to the detection terminal. If not, the detection terminal will be bound to the detected terminal irreversibly, and unbinding is impossible after binding. If the counterfeit product appears, the users at the sales terminal can know that the product is suspected of being counterfeited by scanning and identifying the product through the preset system. In addition, the setting in the present application that the cloud platform sends the password to the current detection terminal can effectively improve flexibility of sales. It eliminates the need for sales staff to query the system and manually provide passwords to customers, thereby streamlining the process and facilitating the binding operation.

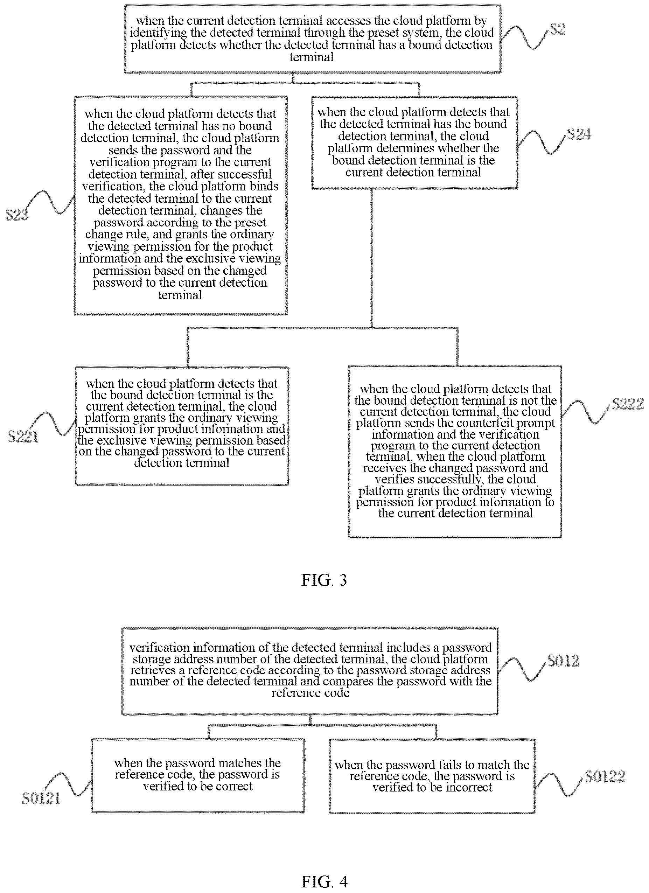

Referring to FIG. 3, in an embodiment, step S2: when the current detection terminal accesses the cloud platform by identifying the detected terminal through the preset system, the cloud platform detects whether the detected terminal has the bound detection terminal, which further includes the following steps:
S23, when the cloud platform detects that the detected terminal has no bound detection terminal, the cloud platform sends the password and the verification program to the current detection terminal, after successful verification, the cloud platform binds the detected terminal to the current detection terminal, changes the password according to the preset change rule, and grants the ordinary viewing permission for the product information and the exclusive viewing permission based on the changed password to the current detection terminal.

S24, when the cloud platform detects that the detected terminal has the bound detection terminal, the cloud platform determines whether the bound detection terminal is the current detection terminal.

S241, when the cloud platform detects that the bound detection terminal is the current detection terminal, the cloud platform grants the ordinary viewing permission for product information and the exclusive viewing permission based on the changed password to the current detection terminal.

S242, when the cloud platform detects that the bound detection terminal is not the current detection terminal, the cloud platform sends the counterfeit prompt information and the verification program to the current detection terminal, when the cloud platform receives the changed password and verifies successfully, the cloud platform grants the ordinary viewing permission for product information to the current detection terminal.

In summary, after completing the binding operation, the password is also changed to enable other users to view the product information by providing the changed password. Although other users may receive the counterfeit prompt information, which may have prompt content such as "The product has been purchased or used, and there is a suspicion of counterfeiting"), the ordinary viewing permission for the product information will be granted to the current detection terminal as long as the password is correct. This setting improves the usability and flexibility of the product.

In addition, in the present application, the detected terminal includes the packaged detected terminal and the product detected terminal, when the cloud platform performs the operation (e.g., identification) on the packaged detected terminal, it simultaneously operates (e.g., identifies) all the product detected terminals within the package.

Specifically, when the cloud platform changes the password of the packaged detected terminal, the passwords of all the product detected terminals within the package are synchronously changed. When the cloud platform binds the current detection terminal to the packaged detected terminal, the current detection terminal is synchronously bound to all the product detected terminals within the package. When the cloud platform grants the exclusive viewing permission based on the password of the packaged detected terminal to the current detection terminal, the exclusive viewing permission based on the passwords of all the product detected terminals within the package is synchronously granted. When the cloud platform grants the ordinary viewing permission for the product information of the packaged detected terminal to the current detection terminal, the ordinary viewing permission for the product information of all the product detected terminals within the package is synchronously granted.

In summary, when the cloud platform changes the password of the packaged detected terminal, the passwords of all the product detected terminals within the package are synchronously changed, and when the cloud platform grants the exclusive viewing permission based on the password of the packaged detected terminal to the current detection terminal, the exclusive viewing permission based on the passwords of all the product detected terminals within the package is synchronously granted. In this way, it is ensured that the previous sellers lose access to both the password of the packaged detected terminal and the passwords of the product detected terminals after successful product verification, thereby further enhancing anti-counterfeiting capability in the product transportation processes. Compared with a case where the passwords of the product detected terminals are not synchronized, this reduces risks of theft or product substitution by preventing previous sellers from retaining valid passwords. When the cloud platform binds the current detection terminal to the packaged detected terminal, the current detection terminal is synchronously bound to all the product detected terminals within the package. This can reduce binding workload when terminal-users purchases in bulk. When the cloud platform grants the ordinary viewing permission for the product information of the packaged detected terminal to the current detection terminal, ordinary viewing permission for the product information of all the product detected terminals within the package is synchronously granted, and when the cloud platform grants the exclusive viewing permission based on the password of the packaged detected terminal to the current detection terminal, the exclusive viewing permission based on the passwords of all the product detected terminals within the package is synchronously granted. This simplifies the anti-counterfeiting authentication and warehousing processes for the distributors, reduces workload of the distributors, accelerates transportation efficiency, and enhances sales management flexibility.

Referring to FIG. 4, in an embodiment, step S12: the cloud platform verifies the password according to the preset comparison rule, which specifically includes the following steps:
S012, verification information of the detected terminal includes a password storage address number of the detected terminal, the cloud platform retrieves a reference code according to the password storage address number of the detected terminal and compares the password with the reference code.

S0121, when the password matches the reference code, the password is verified to be correct.

S0122, when the password fails to match the reference code, the password is verified to be incorrect.

In summary, a method of retrieving via the password storage address number of the detected terminal can improve retrieval speed.

In an embodiment, in step S121, when the cloud platform identifies that the password is correct, the cloud platform changes the password according to the preset change rule, which specifically includes the following steps: when the cloud platform identifies that the password is correct, the cloud platform automatically triggers a password generation system to generate encrypted data, sets the encrypted data as the changed password, and synchronizes a corresponding reference code. The password generation system generating the encrypted data includes randomly generating a UUID as a data source to be encrypted, performing encryption processing on the data source using a MD5 encryption algorithm to obtain the encrypted data.

In summary, the UUID, as a unique identifier, ensures uniqueness of the data source, while the integration of the encryption algorithm guarantees confidentiality and integrity of the data. When the detected terminal is of the QR code, the cloud platform can directly set the corresponding reference code as the encrypted data. When the detected terminal is of the chip, the encrypted data is injected into the chip upon successful verification, and the corresponding reference code is replaced with the encrypted data.

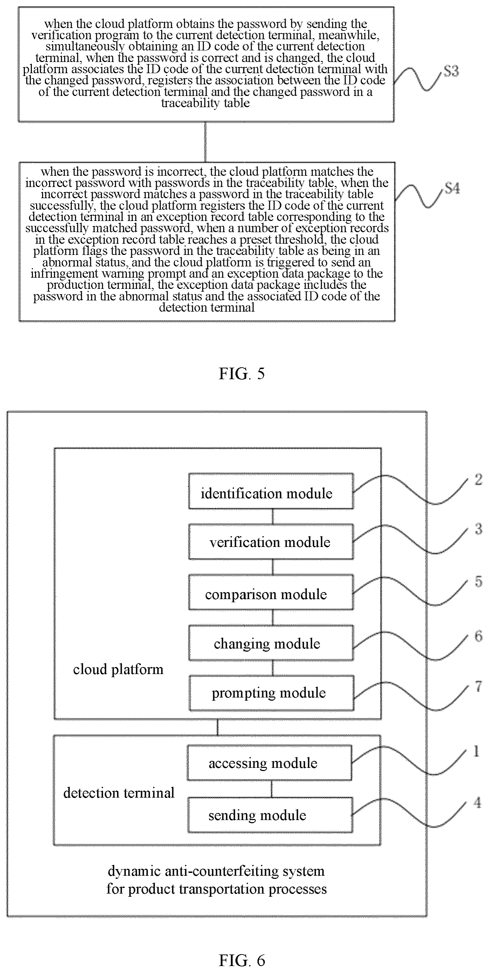

Referring to FIG. 5, in an embodiment, the step of sending the verification program from the cloud platform to the current detection terminal also include:
S3, when the cloud platform obtains the password by sending the verification program to the current detection terminal, meanwhile, simultaneously obtaining an ID code of the current detection terminal, when the password is correct and is changed, the cloud platform associates the ID code of the current detection terminal with the changed password, registers the association between the ID code of the current detection terminal and the changed password in a traceability table;
S4, when the password is incorrect, the cloud platform matches the incorrect password with passwords in the traceability table, when the incorrect password matches a password in the traceability table successfully, the cloud platform registers the ID code of the current detection terminal in an exception record table corresponding to the successfully matched password, when a number of exception records in the exception record table reaches a preset threshold, the cloud platform flags the password in the traceability table as being in an abnormal status, and the cloud platform is triggered to send an infringement warning prompt and an exception data package to the production terminal, the exception data package includes the password in the abnormal status and the associated ID code of the detection terminal.

In summary, an establishment of the traceability table enables timely identification of detected terminals that have been massively counterfeited. By binding the ID of a corresponding detection terminal, the manufacturer can trace owners of problematic detection terminals for the counterfeit product, promptly identify counterfeiting situations, hold each node accountable for forgery responsibilities, and enhance product safety.

It should be understood that the size of sequence numbers of the steps in the above embodiment does not mean an execution order, the execution order of each process should be determined by its function and internal logic, and should not constitute any limitation on an implementation process of the embodiment of the present application.

The embodiment of the present application further provides a dynamic anti-counterfeiting system for product transportation processes, which corresponds one-to-one with the dynamic anti-counterfeiting method for product transportation processes in the above embodiment. Referring to FIG. 6, the dynamic anti-counterfeiting system for the product transportation processes includes a detection terminal and a cloud platform, the detection terminal includes an accessing module 1 and a sending module 4; the cloud platform includes an identification module 2, a verification module 3, a comparison module 5, a changing module 6, and a prompting module 7. The detailed descriptions of each functional module are as follows:
The detection terminal is configured to identify that the detected terminal is accessed to the cloud platform through the accessing module 1, the cloud platform is configured to identify a manner in which the current detection terminal accesses the cloud platform through the identification module 2, and send the verification program to the current detection terminal through the verification module 3 when the detection terminal accesses the cloud platform by directly identifying the detected terminal; the current detection terminal is configured to send the password to the cloud platform for verification through the sending module 4, the password is sourced from a previous seller; the cloud platform is further configured to verify the password according to a preset comparison rule through the comparison module 5, change the password according to a preset change rule through the changing module 6 and grant the ordinary viewing permission for the product information and the exclusive viewing permission based on the changed password to the current detection terminal when it is verified that the password is correct, and send a counterfeit prompt information to the current detection terminal through the prompting module 7 when it is verified that the password is incorrect.

For specific limitations of the dynamic anti-counterfeiting system for the product transportation processes, reference may be made to the limitations of the dynamic anti-counterfeiting method for the product transportation processes described above, which will not be repeated here. Each module in the above dynamic anti-counterfeiting system for the product transportation processes can be implemented in whole or in part by software, hardware, and a combination thereof. The above modules can be embedded in or independent of the processor of the electronic device in a form of hardware, or can be stored in the memory of the electronic device in a form of software, so that the processor can call and execute operations corresponding to the above modules.

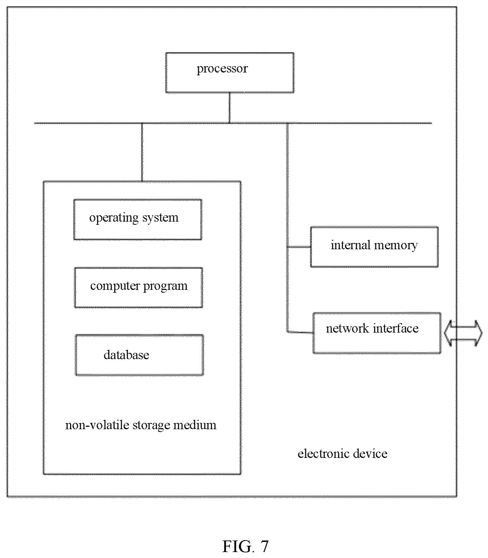

In this embodiment, an electronic device is provided, which may be a computer. Referring to FIG. 7, the electronic device includes a processor, a memory, a network interface, and a database that are connected via a system bus. The processor of the electronic device may be configured to provide computing and controlling capabilities. The memory of the electronic device may include a non-volatile storage medium and an internal memory. The non-volatile storage medium stores an operating system, a computer program, and a database. The internal memory provides an environment for operation of the operating system and the computer program in the non-volatile storage medium. The database of the electronic device is configured to store detection data tables. The network interface of the electronic device is configured to communicate with external terminals via a network connection. When the computer program is executed by the processor, the dynamic anti-counterfeiting method for the product transportation processes is implemented.

In an embodiment, the electronic device is provided, including a memory, a processor, and a computer program stored on the memory and executable on the processor, when the processor executes the computer program, steps in the method embodiment mentioned above are implemented.

The embodiment of the present application further provides a non-volatile computer-readable storage medium storing a computer program that may be loaded and executed by the processor, when the computer program is executed by the processor, the steps of any of the dynamic anti-counterfeiting methods for the product transportation processes mentioned above are implemented , and same effects can be achieved.

The computer-readable storage medium may include, for example, various media capable of storing program codes, such as a USB flash drive, a removable hard drive, a read-only memory (ROM), a random access memory (RAM), a magnetic disk, or an optical disc.

The above are preferred embodiments of the present application, which are not intended to limit the protection scope of the appended claims, any feature provided in the description (including the abstract and drawings), unless specifically stated otherwise, may be replaced by other equivalent or similar-purpose alternative features. That is, unless specifically stated, each feature is merely an example of a series of equivalent or similar features.

## Claims

1. A dynamic anti-counterfeiting method for product transportation processes, **characterized by** comprising:
a detection terminal accesses a cloud platform by identifying a detected terminal, the cloud platform identifies a manner in which a current detection terminal accesses the cloud platform, comprising: when the current detection terminal accesses the cloud platform by identifying the detected terminal through a preset system, the cloud platform detects whether the detected terminal has a bound detection terminal;
when the cloud platform detects that the detected terminal has no bound detection terminal, the cloud platform sends a password and a verification program to the current detection terminal, after successful verification, the cloud platform binds the detected terminal to the current detection terminal, and grants an ordinary viewing permission for product information to the current detection terminal;
when the cloud platform detects that the detected terminal has the bound detection terminal, the cloud platform determines whether the bound detection terminal is the current detection terminal;
when the cloud platform detects that the bound detection terminal is the current detection terminal, the cloud platform grants the ordinary viewing permission for the product information to the current detection terminal;
when the cloud platform detects that the bound detection terminal is not the current detection terminal, the cloud platform sends counterfeit prompt information to the current detection terminal;
when the current detection terminal accesses the cloud platform without identifying the detected terminal through the preset system, the cloud platform sends the verification program to the current detection terminal;
the current detection terminal sends the password to the cloud platform for verification, the password is sourced from a previous seller;
the cloud platform verifies the password according to a preset comparison rule;
when it is verified that the password is correct, the cloud platform changes the password according to a preset change rule, grants the ordinary viewing permission for the product information and an exclusive viewing permission based on the changed password to the current detection terminal, and sends genuine product certification information to the current detection terminal; and
when it is verified that the password is incorrect, the cloud platform sends the counterfeit prompt information to the current detection terminal.

2. The dynamic anti-counterfeiting method for the product transportation processes according to claim 1, **characterized in that** when the current detection terminal accesses the cloud platform by identifying the detected terminal through the preset system, the cloud platform detects whether the detected terminal has the bound detection terminal, further comprises:
when the cloud platform detects that the detected terminal has no bound detection terminal, the cloud platform sends the password and the verification program to the current detection terminal, after successful verification, the cloud platform binds the detected terminal to the current detection terminal, and changes the password according to the preset change rule, grants the ordinary viewing permission for the product information and the exclusive viewing permission based on the changed password to the current detection terminal;
when the cloud platform detects that the detected terminal has the bound detection terminal, the cloud platform determines whether the bound detection terminal is the current detection terminal;
when the cloud platform detects that the bound detection terminal is the current detection terminal, the cloud platform grants the ordinary viewing permission for the product information and the exclusive viewing permission based on the changed password to the current detection terminal; and
when the cloud platform detects that the bound detection terminal is not the current detection terminal, the cloud platform sends the counterfeit prompt information and the verification program to the current detection terminal, when the cloud platform receives and successfully verifies the changed password, the cloud platform grants the ordinary viewing permission for the product information to the current detection terminal.

3. The dynamic anti-counterfeiting method for the product transportation processes according to claim 1, **characterized in that** the cloud platform verifies the password according to the preset comparison rule, comprises:
verification information of the detected terminal comprises a password storage address number of the detected terminal, the cloud platform retrieves a reference code according to the password storage address number of the detected terminal and compares the password with the reference code;
when the password matches the reference code, the password is verified to be correct;
and
when the password fails to match the reference code, the password is verified to be incorrect.

4. The dynamic anti-counterfeiting method for the product transportation processes according to claim 1, **characterized in that** the cloud platform changes the password according to the preset change rule, comprises:
when the cloud platform verifies that the password is correct, the cloud platform automatically triggers a password generation system to generate encrypted data, sets the encrypted data as the changed password, and synchronizes a corresponding reference code, and
wherein the password generation system generating the encrypted data comprises randomly generating a UUID as a data source to be encrypted, performing encryption processing on the data source using a MD5 encryption algorithm to obtain the encrypted data.

5. The dynamic anti-counterfeiting method for the product transportation processes according to claim 1, **characterized in that** the detected terminal comprises a packaged detected terminal and product detected terminals, when the cloud platform operates on the packaged detected terminal, the cloud platform synchronously operates on all the product detected terminals within a package;
wherein, when the cloud platform changes a password of the packaged detected terminal, the cloud platform synchronously changes passwords of all the product detected terminals within the package;
when the cloud platform binds the current detection terminal to the packaged detected terminal, the cloud platform synchronously binds the current detection terminal to all the product detected terminals within the package; when the cloud platform grants the exclusive viewing permission based on the password of the packaged detected terminal to the current detection terminal, the cloud platform synchronously grants the exclusive viewing permission based on the passwords of all the product detected terminals within the package to the current detection terminal; and
when the cloud platform grants the ordinary viewing permission for the product information of the packaged detected terminal to the current detection terminal, the cloud platform synchronously grants the ordinary viewing permission for the product information of all the product detected terminals within the package to the current detection terminal.

6. The dynamic anti-counterfeiting method for product transportation processes according to claim 1 or 2, **characterized in that** the cloud platform sends the verification program to the current detection terminal further comprises:
when the cloud platform obtains the password by sending the verification program to the current detection terminal, simultaneously obtaining an ID code of the current detection terminal, when the password is correct and is changed, associating the ID code of the current detection terminal with the changed password, registering the association between the ID code of the current detection terminal and the changed password in a traceability table; and
when the password is incorrect, matching the incorrect password with passwords in the traceability table, when the incorrect password matches a password in the traceability table successfully, registering the ID code of the current detection terminal in an exception record table corresponding to the successfully matched password, when a number of exception records in the exception record table reaches a preset threshold, flagging the password in the traceability table as being in an abnormal status, and triggering the cloud platform to send an infringement warning prompt and an exception data package to a production terminal, the exception data package comprises the password in the abnormal status and an associated ID code of the detection terminal.

7. A dynamic anti-counterfeiting system for product transportation processes, **characterized by** comprising a detection terminal and a cloud platform, the detection terminal comprises an accessing module (1) and a sending module (4);
the cloud platform comprises an identification module (2), a verification module (3), a comparison module (5), a changing module (6), and a prompting module (7);
wherein the detection terminal is configured to identify that the detected terminal is accessed to the cloud platform through the accessing module (1),
the cloud platform is configured to identify a manner in which the current detection terminal accesses the cloud platform through the identification module (2), comprising:
detecting whether the detected terminal has a bound detection terminal when the detection terminal accesses the cloud platform by identifying the detected terminal through a preset system,
sending a password and a verification program to the current detection terminal when detecting that the detected terminal has no bound detection terminal, binding the detected terminal to the current detection terminal, and granting an ordinary viewing permission for product information to the current detection terminal after successful verification,
determining whether the bound detection terminal is the current detection terminal when it is detected that the detected terminal has the bound detection terminal,
granting the ordinary viewing permission for the product information to the current detection terminal when it is detected that the bound detection terminal is the current detection terminal,
sending counterfeit prompt information to the current detection terminal when it is detected that the bound detection terminal is not the current detection terminal,
sending the verification program to the current detection terminal through the verification module (3) when the detection terminal accesses the cloud platform by directly identifying the detected terminal,
the current detection terminal is configured to send the password to the cloud platform for verification through the sending module (4), the password is sourced from a previous seller;
the cloud platform is further configured to verify the password according to a preset comparison rule through the comparison module (5), change the password according to a preset change rule through the changing module (6) and grant the ordinary viewing permission for the product information and the exclusive viewing permission based on the changed password to the current detection terminal when it is verified that the password is correct, and send the counterfeit prompt information to the current detection terminal through the prompting module (7) when it is verified that the password is incorrect.

8. An electronic device, **characterized by** comprising a memory and a processor, with a computer program stored therein, when the computer program is executed by the processor, the processor implements the dynamic anti-counterfeiting method for the product transportation processes according to any one of claims 1 to 6.

9. A computer-readable storage medium, **characterized by** storing a computer program, when loaded and executed by a processor, the processor implements the dynamic anti-counterfeiting method for the product transportation processes according to any one of claims 1 to 6.
